# EUROPEAN PATENT SPECIFICATION

(11) **EP 2 334 950 B1**
(45) Date of publication and mention of the grant of the patent: **15.08.2012**
(21) Application number: 09789272.3
(22) Date of filing: 08.09.2009
(51) Int. Cl.: F16H 7/12

(54) **TENSIONER**
SPANNVORRICHTUNG
TENDEUR

(30) Priority: 18.09.2008 US 284111
(43) Date of publication of application: 22.06.2011
(73) Proprietor: The Gates Corporation, Denver, CO 80202 (US)
(72) Inventor: WARD, Peter Alan, Farmington Hills Ml 48331 (US); HALLEN, Juergen, 52066 Aachen (DE)
(74) Representative: Tunstall, Christopher Stephen
(86) International application number: PCT/US2009/005027
(87) International publication number: WO 2010/033160

(56) References cited:
- WO-A-03/048606
- GB-A- 2 249 152
- US-A1- 2008 058 143
- US-A1- 2008 171 622

## Description

### Field of the Invention

The invention relates to a tensioner, according to the preamble of claim 1 and as it is disclosed in WO03048606A.

### Background of the Invention

The two most common prior arts for synchronously driving rotating members, such as cam shafts and balance shafts, from a crankshaft are timing chains and belts. Timing chains require engine oil to operate. In comparison most timing belt applications require that no oil be present in the belt drive as the presence of oil can damage the belt and inhibit its intended purpose. Recent improvements in belts no long require that a belt be sealed from the engine oil environment.

The recent improvement of belts to operate in oil, however poses other problems that need to be solved. One specific problem is properly tensioning the belt drive to keep the camshaft synchronized with the crankshaft. Should the camshaft or other synchronized driven crankshaft component no longer be properly synchronized with the crankshaft; catastrophic engine damage can result.

To transmit power through the belt from the rotating crankshaft one side of the belt is pulled around the crankshaft and is commonly referred to as the belt tight side by those skilled in the art. Conversely the other side is referred to as the belt slack side, since the belt is being pushed away from the crankshaft. It is important to provide tensioning to the slack side of the belt to prevent the belt from becoming unduly slack and thus causing a loss of synchronization between the crankshaft and the components rotated by the crankshaft. This loss of synchronization is commonly referred to as "tooth jump" or "ratcheting" by those skilled in the art.

Compounding the problem of eliminating belt slack to prevent "tooth jump" or "ratcheting" is excessive tensioner arm motion or vibration induced by the engine's angular vibration. Excessive arm motion could not only lead to a "tooth jump" or a "ratcheting" condition, but can also reduce the useful life of the tensioner and the belt as well. To minimize the amount of arm vibration; friction damping is commonly used to prevent the tensioner from moving away from the belt.

The presence of oil makes friction damping difficult to achieve. One skilled in the art appreciates that the application of a lubricant to two rubbing surfaces will allow relative motion between the two surfaces to occur more easily.

Representative of the art is US patent no. 5,064,405 (1999) which discloses an adjustable locked center and dynamic tensioner include both a method for setting tension in a belt or chain drive system and apparatus for setting the friction torque so as to match the system setting torque. The method includes forcing the tensioner against a stable mounting surface with sufficient spring load that a target friction torque will be required to rotate the tensioner. The tensioner arm is then rotated into the belt or chain until, when the setting torque is removed, the belt or chain will counter rotate the tensioner arm and the target friction torque in the tensioner will cause the target setting tension to remain in the system. The apparatus includes a tensioner arm pivotally mounted on a fixed surface with a spring engaging the arm and being clamped against the fixed surface. Modifications include introducing a compliant coupler such as an elastomeric busing or spring between the stable mounting surface and the tensioner arm.

What is needed is a tensioner comprising three or more concentric cylindrical bushings, each bushing frictionally engaged with the arm and the sleeve for damping an arm movement in a lubricant coating. The present invention meets this need.

### Summary of the Invention

The primary aspect of the invention is to provide a tensioner comprising three or more concentric cylindrical bushings, each bushing frictionally engaged with the arm and the sleeve for damping an arm movement in a lubricant coating.

Other aspects of the invention will be pointed out or made obvious by the following description of the invention and the accompanying drawings.

The invention comprises a tensioner comprising a base having a sleeve, an arm pivotally engaged with the sleeve, a spring engaged between the arm and the base, a pulley journalled to the arm, an adjuster engaged with the sleeve for rotationally adjusting a position of the sleeve on a mounting surface, three or more concentric cylindrical bushings, each bushing frictionally engaged with the arm and the sleeve for damping an arm movement, and each concentric cylindrical bushing is suitable for operation with a lubricant coating, characterized in that the arm further comprises a cylindrical member; and the sleeve further comprises a cylindrical collar which is concentrically interleaved between the arm and cylindrical member.

### Brief Description of the Drawings

The accompanying drawings, which are incorporated in and form a part of the specification, illustrate preferred embodiments of the present invention, and together with a description, serve to explain the principles of the invention.
Figure 1 is a cross-section of the tensioner.
Figure 2 is an exploded view of the tensioner.

### Detailed Description of the Preferred Embodiment

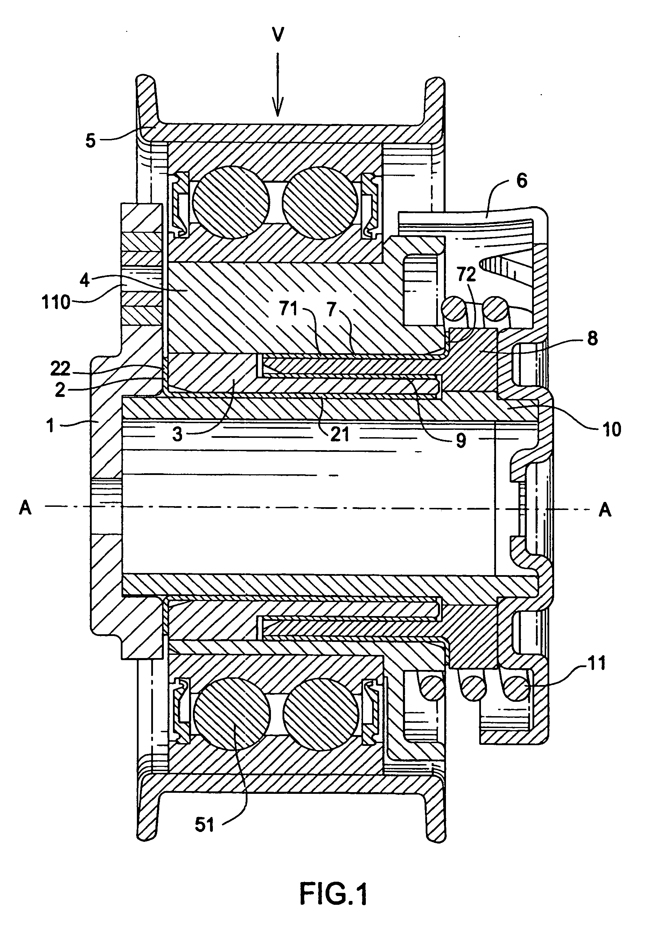

Figure 1 is a cross-section of the tensioner. The tensioner comprises adjuster 1. Adjuster 1 is eccentric and is used to move the tensioner arm 4 into proper contact with the belt during installation. A tool (not shown) is inserted into tool receiving portion 110 whereby adjuster 4 is rotated. As adjuster 1 is rotated about axis A-A it pivots about a bolt or other suitable fastener (not shown) that passes through adjuster 1 and pushes the tensioner into position through movement of sleeve 10.

Pulley 5 is the component that directly contacts the belt (not shown) to provide proper belt tension. Pulley 5 is journalled to arm 4 through a bearing 51. Bearing 51 comprises a ball bearing as shown, but could also comprise a needle bearing or other suitable bearing known in the art. Pulley 5 shown with a flat surface 51 for engaging the back side of a timing belt.

Arm 4 is connected to the inner race of bearing 51 and is urged against a belt by spring 11. Spring 11 comprises a coil spring and has an end engaged with arm 4. Spring 11 is also engaged with base 6. Base 6 is statically attached to an engine which acts as a tensioner mounting surface. The torque from spring 11 and the effective arm length of arm 4 is used to create belt tension.

Cylindrical member 3 is press fit into arm 4. Collar 8 is a clearance fit onto sleeve 10 and collar 8 is not moveable with respect to sleeve 10. Sleeve 10 is press fit into base 6. With respect to axis A-A member 3 is intermediate between cylindrical collar 8 and sleeve 10. During operation arm 4 and member 3 are moveable with respect to sleeve 10 and collar 8. Sleeve 10 and collar 8 do not move during operation of the tensioner since they are fixedly connected to the base.

The intermediate position of member 3 creates three separate frictional surfaces that contact bushing 2, bushing 7 and bushing 9, which frictional contacts generate friction damping. Each bushing 2, 7 and 9 is cylindrical.

Bushing 2 is disposed between member 3 and adjuster 1 and between member 3 and sleeve 10. Bushing 2 comprises portion 21 and portion 22. Portion 22 contacts adjuster 1 and member 3. Portion 21 contacts sleeve 10 and member 3. Bushing 7 is between collar 8 and arm 4. Bushing 7 comprises portion 71 and portion 72. Portion 71 and portion 72 each contact collar 8 and arm 4. Bushing 9 contacts collar 8 and member 3. Each bushing 2, 7 and 9 has a progressively smaller diameter, namely, bushing 2 is a smaller diameter than bushing 9 which in turn has a smaller diameter than bushing 7.

A further benefit of the cylindrical form of the bushings is that a frictional force is generated regardless of the direction of the belt tension force vector V applied to the pulley 5. The belt tension force is generated by spring 11 urging arm 4 against a belt. The vector V is generally parallel to a radial projected normally from axis A-A.

Bushing 3 can be integrated into arm 4, for example, by molding. It may also be a separate component from arm 4 and press fit to simplify manufacturing. Bushings 2, 7 and 9 may comprise plastic, phenolic multi-layer, sintered metal and metallic. Bushings 2, 7 and 9 are concentric and cylindrical with respect to axis A-A.

Collar 8 is rotationally locked to sleeve 10 to ensure that bushing 7 (connected to arm 4) and that bushing 9 (connected to bushing 3) have a static frictional surface to act against. Collar 8 is rotationally locked with a hex, but can be rotationally locked to sleeve 10 through various other means known in the arts, such as splines, tabs, flats, or a heavy press fit.

Collar 8, member 3 and arm 4 are concentrically interleaved or nested in order to minimize the size of the tensioner and to accommodate each of the cylindrical bushings 2, 7 and 9.

The inventive tensioner operates in an oil environment. More particularly, the bushing surfaces are continuously exposed to and receive a lubricant film because the internals of the tensioner are not sealed. For example, the inventive tensioner could be used in a timing belt drive where the tensioner is in a protected environment under an engine timing cover.

In prior art tensioners the lubricant normally present in such an environment would diminish or defeat proper damping operation of the bushing surfaces because the lubricant would reduce the coefficient of friction, thereby reducing the frictional force.

On the other hand, the inventive tensioner relies upon multiple bushing frictional surfaces to generate the required damping (frictional) forces, even when coated with a lubricant.

The inventive tensioner can be used in any lubricant environment wherein the lubricant does not adversely affect the bushings, arm 4, collar 8, member 3 and sleeve 10, including lubricants used for vehicular engine applications.

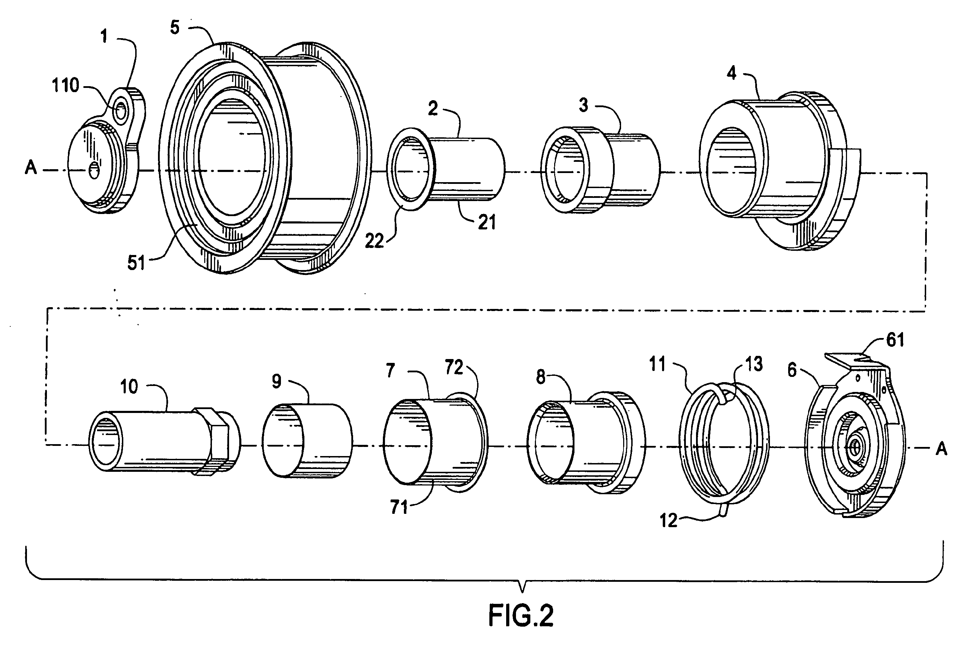

Figure 2 is an exploded view of the tensioner. Base 6 comprises a member 61 which can be used to index the tensioners position on a mounting surface. The inventive tensioner does not use any seals to protect the bushings from debris since the tensioner is generally used in a lubricant bathed environment. End 12 of spring 11 engages base 6. End 13 of spring 11 engages arm 4.

## Claims

1. A tensioner comprising:
an base (6) having a sleeve (10);
an arm (4) pivotally engaged with the sleeve (10);
a spring (11) engaged between the arm (4) and the base (6),
a pulley (5) journalled to the arm (4);
an adjuster (1) engaged with the sleeve (10) for rotationally adjusting a position of the sleeve on a mounting surface;
three or more concentric cylindrical bushings (2,7,9), each bushing frictionally engaged with the arm (4) and the sleeve (10) for damping an arm movement; and
each concentric cylindrical bushing (2,7,9) is suitable for operation with a lubricant coating, **characterised in that**:
the arm (4) further comprises a cylindrical member (3); and
the sleeve (10) further comprises a cylindrical collar (8) which is concentrically interleaved between the arm (4) and cylindrical member (3).

2. The tensioner as in claim 1, wherein the spring (11) comprises a coil spring.

3. The tensioner as in claim 2, wherein the adjuster (1) comprises a tool receiving portion (110).

## Patentansprüche

1. Spannvorrichtung, umfassend:
eine Basis (6) mit einer Hülse (10);
einen Arm (4), der schwenkbar mit der Hülse (10) in Eingriff steht;
eine Feder (11), die zwischen dem Arm (4) und der Basis (6) in Eingriff steht,
eine Riemenscheibe (5), die am Arm (4) gelagert ist;
eine Einstellvorrichtung (1), die mit der Hülse (10) zur Dreheinstellung einer Position der Hülse auf einer Montagefläche in Eingriff steht;
drei oder mehr konzentrische zylindrische Buchsen (2, 7, 9), wobei jede Buchse mit dem Arm (4) und der Hülse (10) zur Dämpfung einer Armbewegung in Reibeingriff steht; und
jede konzentrische zylindrische Buchse (2, 7, 9) zum Betrieb mit einer Schmiermittelbeschichtung geeignet ist,
**dadurch gekennzeichnet, dass**
der Arm (4) weiterhin ein zylindrisches Glied (3) umfasst; und
die Hülse (10) weiterhin einen zylindrischen Bund (8) umfasst, der zwischen dem Arm (4) und dem zylindrischen Glied (3) konzentrisch verschachtelt ist.

2. Spannvorrichtung nach Anspruch 1, wobei die Feder (11) eine Schraubenfeder umfasst.

3. Spannvorrichtung nach Anspruch 2, wobei die Einstellvorrichtung (1) einen Werkzeugaufnahmeteil (110) umfasst.

## Revendications

1. Tendeur comprenant :
une base (6) ayant un manchon (10) ;
un bras (4) en prise pivotante avec le manchon (10) ;
un ressort (11) en prise entre le bras (4) et la base (6),
une poulie (5) tourillonnée sur le bras (4) ;
un dispositif d'ajustement (1) en prise avec le manchon (10) de manière à ajuster par rotation une position du manchon sur une surface de montage ;
trois ou plus de trois douilles cylindriques concentriques (2, 7, 9), chaque douille étant en prise par friction avec le bras (4) et le manchon (10) de manière à amortir un mouvement du bras ;
et
chaque douille cylindrique concentrique (2, 7, 9) étant adaptée pour fonctionner avec un revêtement lubrifiant,
**caractérisé en ce que** :
le bras (4) comprend en outre un organe cylindrique (3) ; et
le manchon (10) comprend en outre un collier cylindrique (8) qui est emboîté de manière concentrique entre le bras (4) et l'organe cylindrique (3).

2. Tendeur selon la revendication 1, dans lequel le ressort (11) est constitué d'un ressort à boudin.

3. Tendeur selon la revendication 2, dans lequel le dispositif d'ajustement (1) comprend une portion de réception d'outil (110).
